# EUROPÄISCHE PATENTANMELDUNG

(11) **EP 1 044 845 A2**
(43) Veröffentlichungstag der Anmeldung: **18.10.2000**
(21) Anmeldenummer: 00107575.3
(22) Anmeldetag: 07.04.2000
(51) Int. Cl.: B60N 2/48, B64D 11/06

(54) **Kopfstütze**

(30) Priorität: 13.04.1999 DE 19916592
(71) Anmelder: AIDA Development GmbH, 74523 Schwäbisch-Hall (DE)
(72) Erfinder: Schoenenberg, Frank-Heinrich, 74523 Schwäbisch Hall (DE); König, Thomas, 92637 Weiden (DE)
(74) Vertreter: Preissner, Nicolaus, Dipl.-Ing.

(57) **Zusammenfassung**

Die vorliegende Erfindung betrifft eine Kopfstütze (13) für einen Fahrzeugsitz (10) mit mindestens zwei zueinander beabstandeten elastischen Stützelementen (15, 16). Zur Verbesserung der Bequemlichkeit und Sicherheit sind die Stützelemente (15; 16) gegenüber dem Fahrzeugsitz (10) verstellbar und arretierbar.

## Beschreibung

Die vorliegende Erfindung betrifft eine Kopfstütze für einen Fahrzeugsitz, insbesondere für einen Fluggastsitz, mit mindestens zwei zueinander beabstandeten elastischen Stützelementen.

Derartige Kopfstützen werden in großem Umfang in Flugzeugen, Zügen und Kraftfahrzeugen verwendet. Der Abstand zwischen den Stützelementen ist vorgegeben. Hierdurch läßt sich eine Anpassung der Kopfstütze an unterschiedliche Benutzer nur schlecht erreichen. Die bekannten Kopfstützen sind daher für die meisten Nutzer nicht bequem und weisen darüber hinaus Sicherheitsmängel auf.

Aufgabe der vorliegenden Erfindung ist es daher, eine Kopfstütze bereitzustellen, die mit einfachen Mitteln eine hohe Bequemlichkeit und Sicherheit sowie eine Anpassung an individuelle Bedürfnisse ermöglicht.

Erfindungsgemäß wird diese Aufgabe bei einer Kopfstütze der eingangs genannten Art dadurch gelöst, daß die Stützelemente gegenüber dem Fahrzeugsitz verstellbar und arretierbar sind.

Die Verstellbarkeit des Stützelements gegenüber dem Fahrzeugsitz ermöglicht eine rasche und einfache Anpassung an den jeweiligen Nutzer. Insbesondere ist für jeden Nutzer eine Führung des Kopfes durch den Fahrzeugsitz und die Stützelemente möglich. Hierdurch werden die Bequemlichkeit und Sicherheit wesentlich verbessert.

Vorteilhafte Ausgestaltungen und Weiterbildungen der Erfindung gehen aus den Unteransprüchen hervor.

Gemäß einer vorteilhaften Ausgestaltung ist jedes Stützelement an einem Tragteil angeordnet, das an einer Rückenlehne des Fahrzeugsitzes festgelegt ist. Die Stützelemente sind unabhängig voneinander an der Rückenlehne des Fahrzeugsitzes festgelegt und daher einfach zu montieren. Gleichzeitig wird die Konstruktion des Fahrzeugsitzes vereinfacht, da die Rückenlehne zum Befestigen der Stützelemente lediglich verlängert werden muß.

Vorteilhaft sind die Stützelemente gegenüber der Rückenlehne verdrehbar und/oder verschieblich, insbesondere höhenverstellbar und/oder seitlich verschieblich. Das Verschieben der Stützelemente ermöglicht eine Höhenverstellung zur Anpassung an unterschiedliche Körpergrößen. Der Abstand zwischen den beiden Stützelementen kann durch eine seitliche Verschiebung eingestellt werden. Das Verdrehen ermöglicht eine Winkelstellung des Stützelements. Es können insbesondere Schrägflächen zum Ablegen des Kopfes zur linken oder rechten Seite bereitgestellt werden.

In vorteilhafter Weiterbildung verjüngt sich das Stützelement ausgehend von der Rückenlehne und ist insbesondere pyramidenförmig oder konusförmig ausgebildet. Hierdurch wird eine gute Führung im Nackenbereich und Hinterkopfbereich bereitgestellt, wobei die seitliche Verdrehbarkeit des Kopfes nicht beeinträchtigt wird.

Nach einer ersten vorteilhaften Ausgestaltung fallen die Drehachse und die Mittelachse des Stützelements zusammen. Jedes Stützelement kann dann verdreht werden, ohne daß sich der Abstand zwischen den Stützelementen verändert. Die Drehposition des Stützelements kann damit unabhängig vom Abstand und der Höhenposition eingestellt werden, so daß eine einfache Verstellbarkeit erreicht wird.

Gemäß einer zweiten Ausgestaltung sind die Drehachse und die Mittelachse des Stützelements zueinander versetzt. Bei einem Verdrehen des Stützelements wandert somit die Mittelachse. Es läßt sich daher eine Höhenverstellung und Seitenverstellung allein durch das Verdrehen des Stützelements erreichen. Aufwendige Führungen sind nicht erforderlich.

Die Lage der Mittelachse wird durch den Grundriß des Stützelements festgelegt. Wird ein viereckiger Grundriß verwendet, so verläuft die Mittelachse durch den Schnittpunkt der Diagonalen. Bei anderen Grundrissen wird der Mittelpunkt des Umkreises verwendet, auf dem die Ecken des Grundrisses des Stützelements liegen. Ist der Grundriß des Stützelements im wesentlichen oder vollständig rund, wird der Mittelpunkt des entsprechenden Kreises herangezogen.

Vorteilhaft verändert sich der Winkel zwischen der Mantelfläche des Stützelements und der Rückenlehne entlang des Umfangs des Stützelements. Durch ein Verdrehen des Stützelements können daher unterschiedlich geneigte Anlageflächen für den Kopf bereitgestellt werden. Hierdurch werden die Bequemlichkeit und die Sicherheit weiter verbessert.

In vorteilhafter Weiterbildung weist das Stützelement Seitenflächen auf, die unterschiedliche Winkel mit der Rückenlehne einschließen. Diese Seitenflächen stellen vergleichsweise große Anlageflächen in unterschiedlichen Winkeln für den Kopf bereit, so daß Druckstellen zuverlässig vermieden werden.

Nach einer vorteilhaften Ausgestaltung weisen die Seitenflächen des Stützelements an ihrer der Rückenlehne zugewandten Seite Seitenkanten unterschiedlicher Länge auf. Hierdurch wird sichergestellt, daß die Seitenflächen unterschiedliche Winkel mit der Rückenlehne einschließen. Da die Größe der Seitenflächen von der Länge der Seitenkanten abhängt, können Seitenflächen und damit Anlageflächen für den Kopf in unterschiedlichen Größen und Winkelstellungen bereitgestellt werden.

Gemäß einer vorteilhaften Ausgestaltung ist die Spitze des Stützelements gegenüber der Mittelachse des Stützelements versetzt. Auch durch diese Maßnahme schließen die Seitenflächen unterschiedlicher Winkel mit der Rückenlehne ein. Der Grundriß der Stützelemente bleibt hiervon unbeeinflußt. Es ergibt sich ein ruhiger, ansprechender optischer Eindruck.

Vorteilhaft umfaßt das Tragteil einen zweiteiligen Drehzapfen mit einer Profilverzahnung. Diese Verbindung ist rasch und einfach mit geringem Aufwand zu realisieren. Die Profilverzahnung ermöglicht ein Verdrehen des Stützelements gegenüber der Rückenlehne. Durch die Profilverzahnung wird das Stützelement automatisch wiederum fixiert. Durch die Größe der Profilverzahnung und die Ausbildung der Zähne können der minimale Verdrehwinkel des Stützelements sowie die zum Verdrehen erforderliche Kraft eingestellt werden.

In vorteilhafter Ausgestaltung sind die beiden Teile des Drehzapfens gegeneinander mit einer Feder vorgespannt. Die Feder ermöglicht ein Verschieben der beiden Teile gegeneinander, so daß die Profilverzahnung gelöst werden kann. Anschließend werden die beiden Teile durch die Feder wieder aufeinander zubewegt. Die Profilverzahnung rastet daher automatisch wieder ein.

Nach einer vorteilhaften Weiterbildung ist das Stützelement an einem Schlitten befestigt, der in einer Kulissenführung der Rückenlehne verschieblich ist. Diese Kulissenführung ermöglicht eine Verstellung des Stützelements in der Höhe und/oder seitlich. Hierdurch werden die Anpassungsmöglichkeiten an die individuellen Bedürfnisse des Benutzers weiter verbessert.

Die Erfindung betrifft ebenfalls ein Stützelement für eine derartige Kopfstütze, wobei das Stützelement aus einem Schaumstoff hergestellt ist. Hierdurch wird die gewünschte Elastizität bei geringem Gewicht gewährleistet.

Nachstehend wird die Erfindung anhand mehrerer Ausführungsformen näher beschrieben, die in schematischer Weise in der Zeichnung dargestellt sind. Dabei zeigt:
- Figur 1: eine schematische Seitenansicht eines Sitzes mit der erfindungsgemäßen Kopfstütze;
- Figur 2: eine Ansicht in Pfeilrichtung II in Figur 1 in erster Ausführungsform;
- Figur 3: eine Ansicht in Figur 2 in zweiter Ausführungsform;
- Figur 4: eine Ansicht ähnlich Figur 2 in dritter Ausführungsform;
- Figur 5: einen Schnitt längs der Linie V-V in Figur 4;
- Figur 6: eine Ansicht ähnlich Figur 5 in weiterer Ausführungsform; und
- Figur 7: eine Darstellung der Befestigung des Stützelements an der Rückenlehne.

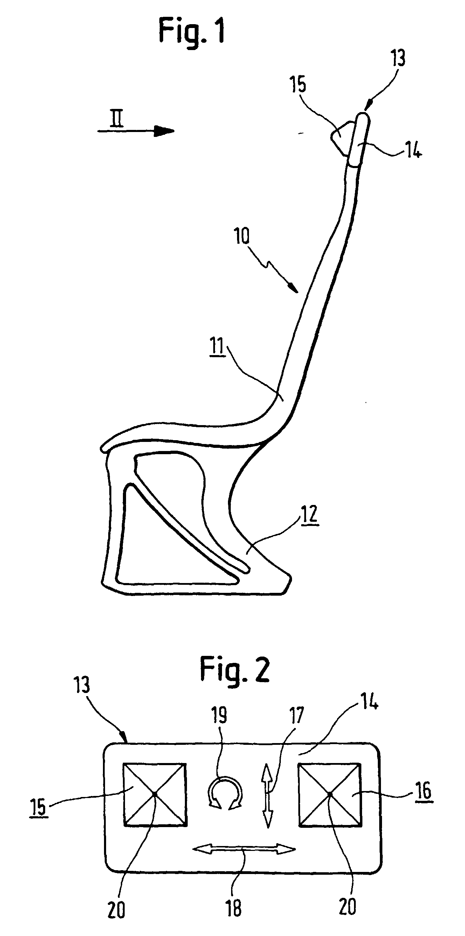

Figur 1 zeigt eine schematische Seitenansicht eines Fahrzeugsitzes 10 mit einem Sitzteil 11, das an einem Traggestell 12 befestigt ist. Das Sitzteil 11 weist eine Kopfstütze 13 auf, die zwei Stützelemente 15, 16 umfaßt. Die Stützelemente 15, 16 sind an einer Rückenlehne 14 des Fahrzeugsitzes 10 angeordnet. Der Fahrzeugsitz 10 kann insbesondere in Flugzeugen zum Einsatz kommen.

Figur 2 zeigt eine nähere Darstellung der Kopfstütze 13 gemäß einer Ansicht in Pfeilrichtung II in Figur 1. Die Kopfstütze 13 in der Ausführungsform gemäß Figur 2 umfaßt zwei Stützelemente 15, 16, die gegenüber der Rückenlehne 14 in Pfeilrichtung 17 höhenverstellbar und in Pfeilrichtung 18 seitlich verschieblich sind. Weiter sind die Stützelemente 15, 16 gegenüber der Rückenlehne 14 in Pfeilrichtung 19 verdrehbar. Die Höhenverstellung der Stützelemente 15, 16 ermöglicht eine Anpassung an unterschiedliche Körpergrößen. Die Abmessungen des Fahrzeugsitzes 10 bleiben hierbei unverändert, insbesondere wird die Rückenlehne des Sitzteils 11 nicht verlängert. Weiter ist der Abstand zwischen den Stützelementen 15, 16 durch die seitliche Verschiebbarkeit in Pfeilrichtung 18 einstellbar. Die erfindungsgemäße Kopfstütze 13 kann somit an unterschiedliche Kopfgrößen angepaßt werden.

Durch eine Verdrehung der Stützelemente 15, 16 werden Schrägflächen zum Ablegen des Kopfes bereitgestellt.

Die Stützelemente 15, 16 sind in der Ausführungsform gemäß Figur 2 pyramidenförmig ausgebildet. Die Spitze 20 der Pyramide fällt mit der Drehachse 26 und der Mittelachse 25 des Stützelements zusammen. Die Drehposition der Stützelemente 15, 16 kann daher ohne ein Verstellen des Abstands zwischen den Stützelementen 15, 16 und ohne Verstellen der Höhenposition eingestellt werden.

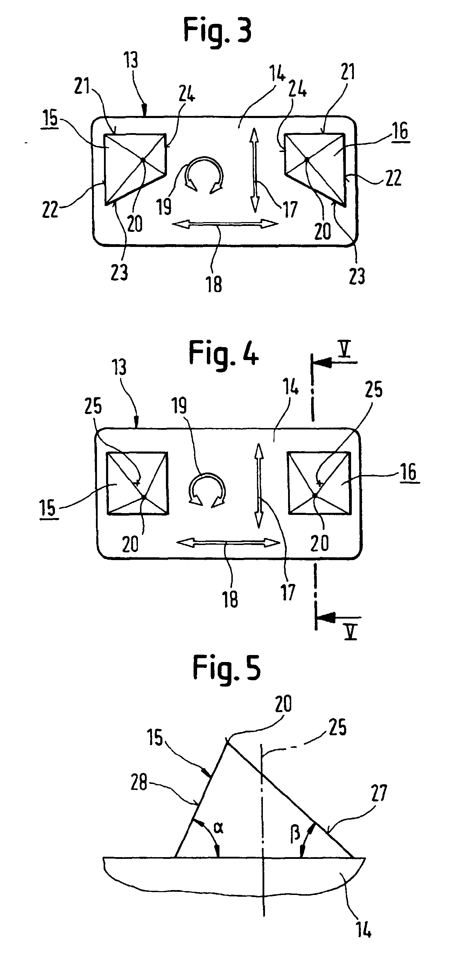

In den Figuren 3 und 4 sind zwei weitere Ausführungsformen einer erfindungsgemäßen Kopfstütze 13 in einer Ansicht gemäß Figur 2 dargestellt. Gleiche oder ähnliche Bauteile wie in Figur 2 werden mit denselben Bezugszeichen versehen. Zur Vermeidung von Wiederholungen wird auf obige Ausführungen verwiesen.

Bei der Kopfstütze 13 gemäß Figur 3 weisen die Stützelemente 15, 16 Seitenkanten 21, 22, 23, 24 unterschiedlicher Länge auf. Auf Grund dieser unterschiedlichen Längen schließen die Seitenflächen 27, 28 der Stützelemente 15, 16 unterschiedliche Winkel α, β mit der Rückenlehne 14 ein. Durch ein Verdrehen der Stützelemente 15, 16 können somit andere Flächen für den Kopf eines Nutzers in unterschiedlichen Winkelstellungen und in unterschiedlichen Größen bereitgestellt werden. So kann für den Wachzustand eine Position der Stützelemente 15, 16 gewählt werden, in der die Seitenkanten 24 im wesentlichen senkrecht verlaufen, wie in Figur 3 dargestellt. Zum Ruhen können eines oder beide der Stützelemente 15, 16 in Pfeilrichtung 19 verdreht werden und hierdurch Anlageflächen 27, 28 mit unterschiedlichem Winkel α, β gegenüber der Rückenlehne 14 bereitstellen.

Figur 4 zeigt eine dritte Ausführungsform einer erfindungsgemäßen Kopfstütze 13. Bei dieser Ausführungsform ist die Spitze 20 der pyramidenförmigen Stützelemente 15, 16 gegenüber der Mittelachse 25 der Stützelemente 15, 16 versetzt. Wird ein im wesentlichen quadratischer Grundriß für die Stützelemente 15, 16 verwendet, so wird die Mittelachse 25 als Lot durch den Diagonalenschnittpunkt festgelegt, wie in Figur 4 dargestellt. Bei anderen Grundrißformen kann der Mittelpunkt des Umkreises verwendet werden.

In dem Schnitt gemäß Figur 5 ist das Versetzen der Spitze 20 gegenüber der Mittelachse 25 schematisch dargestellt. Die Seitenfläche 28 schließt einen ersten Winkel α mit der Rückenlehne 14 ein, während die gegenüberliegende Seitenfläche 27 des Stützelements 15 einen zweiten, kleineren Winkel β mit der Rückenlehne 14 einschließt. Der Unterschied zwischen den Winkeln α, β hängt von dem Versatz zwischen der Spitze 20 und der Mittelachse 25 ab. Durch ein Verdrehen der Stützelemente 15, 16 kann somit nicht nur die Winkelstellung der Seitenkanten 21, 22, 23, 24 eingestellt werden. Es ist ebenfalls möglich, als Anlageflächen für den Kopf Seitenflächen 27, 28 mit unterschiedlichen Winkeln α, β bereitzustellen. Zusammen mit der Höhen- und Seitenverstellung der Stützelemente 15, 16 ergibt sich eine optimale Anpassung an die jeweiligen individuellen Bedürfnisse des Nutzers.

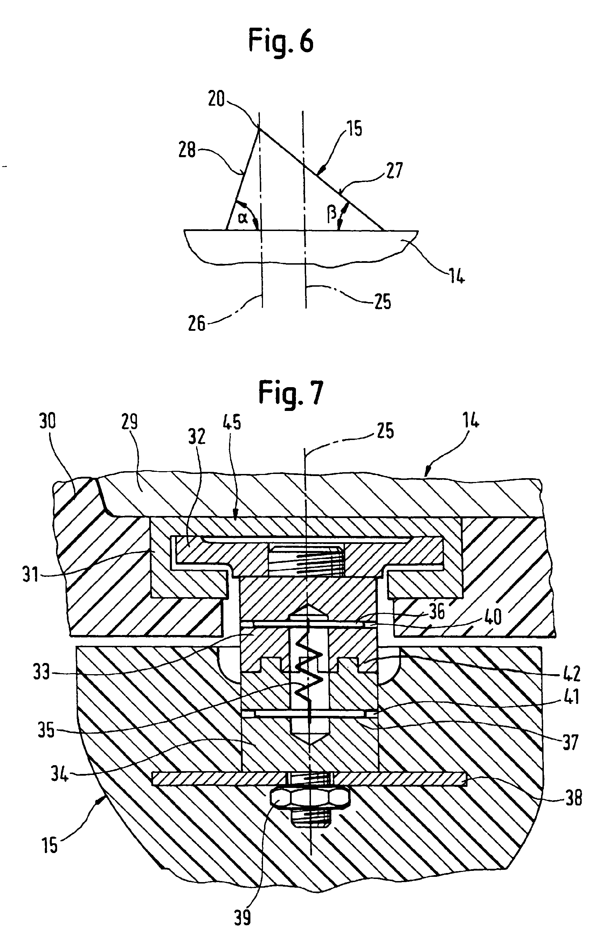

Es ist selbstverständlich ebenfalls möglich, konusförmige Stützelemente 15, 16 zu verwenden. Bei einem Versatz der Spitze 20 gegenüber der Mittelachse 25 ändert sich der Winkel α bzw. β zwischen der Mantelfläche 27, 28 der Stützelemente 15, 16 und der Rückenlehne 14 fortlaufend entlang des Umfangs der Stützelemente 15, 16. Dies ist beispielsweise in Figur 6 dargestellt.

Figur 6 zeigt weiter ein Stützelement 15, bei dem die Drehachse 26 und die Mittelachse 25 des Stützelements 15 zueinander versetzt sind. Durch diesen Versatz wird bei einem Verdrehen der Stützelemente 15, 16 in Pfeilrichtung 19 automatisch eine Höhen- und Seitenverstellung vorgenommen. Insbesondere kann der Abstand der Stützelemente 15, 16 zueinander durch dieses Verdrehen verändert werden. Ein Versatz der Drehachse 26 gegenüber der Mittelachse 25 zusammen mit einer Höhenverstellung der Stützelemente 15, 16 ermöglicht somit eine Verstellung des Abstands zwischen den Stützelementen 15, 16. Dies ist insbesondere bei Stützelementen gemäß Figur 2 vorteilhaft, bei denen sämtliche Seitenflächen 27, 28 denselben Winkel α, β mit der Rückenlehne 14 einschließen. Die maximale Abstandsänderung zwischen den Stützelementen 15, 16 ist viermal so groß wie der Versatz zwischen der Drehachse 26 und der Mittelachse 25. Falls Stützelemente 15, 16 mit unterschiedlichem Versatz verwendet werden, kann eine fein abgestufte Abstandsverstellung erfolgen.

Figur 7 zeigt eine vergrößerte Darstellung der Befestigung des Stützelements 15 an der Rückenlehne 14 mittels eines Tragteils 45. Die Rückenlehne 14 weist eine Stützstruktur 29 mit einem Überzug 30 auf. An der Stützstruktur 29 ist eine Kulissenführung 31 befestigt, in der ein Schlitten 32 in Pfeilrichtung 17 höhenverstellbar angeordnet ist. Der Schlitten 32 trägt zwei Teile 33, 34 eines Drehzapfens, an dem das Stützelement 15 befestigt ist. Die beiden Teile 33, 34 sind über eine Feder 35 gegeneinander verspannt. Diese Feder 35 greift an Stiften 36, 37 an, die in zugehörige Querbohrungen 40, 41 der Teile 33, 34 eingeschoben sind. Zum Sichern des Stützelements 15 dienen eine Scheibe 38 sowie eine Mutter 39, die ein Abziehen des Stützelements 15 verhindert. Das Tragteil 45 umfaßt die Bauelemente 31 bis 41.

Zwischen den beiden Teilen 33, 34 ist eine Profilverzahnung 42 vorgesehen. Die Profilverzahnung 42 kann insbesondere als Schrägverzahnung ausgeführt werden. Beim Verdrehen des Stützelements 15 um die Drehachsen 25 wird die Profilverzahnung 42 automatisch entriegelt und die Feder 35 gedehnt. Nach der Drehung um eine Teilung der Profilverzahnung 42 rastet diese automatisch wieder ein. Das Stützelement 15 ist somit erneut zuverlässig fixiert.

Die erfindungsgemäße Kopfstütze 13 ermöglicht eine Höhenverstellung, Seitenverstellung und ein Verdrehen der Stützelemente 15, 16. Hierdurch wird eine optimale Anpassung an die individuellen Bedürfnisse des jeweiligen Nutzers erreicht. Gleichzeitig werden die Führung des Kopfes und somit die Sicherheit verbessert.

## Patentansprüche

1. Kopfstütze für einen Fahrzeugsitz (10), insbesondere für einen Fluggastsitz, mit mindestens zwei zueinander beabstandeten elastischen Stützelementen (15; 16), dadurch gekennzeichnet, daß die Stützelemente (15; 16) einzeln gegenüber dem Fahrzeugsitz (10) verstellbar und arretierbar sind.

2. Kopfstütze nach Anspruch 1, dadurch gekennzeichnet, daß jedes Stützelement (15; 16) an einem Tragteil (45) angeordnet ist, das an einer Rückenlehne (14) des Fahrzeugsitzes (10) festgelegt ist.

3. Kopfstütze nach Anspruch 1 oder 2, dadurch gekennzeichnet, daß die Stützelemente (15; 16) gegenüber der Rückenlehne (14) verdrehbar und/oder verschieblich, insbesondere höhenverstellbar und/oder seitlich verschieblich, sind.

4. Kopfstütze nach einem der Ansprüche 1 bis 3, dadurch gekennzeichnet, daß das Stützelement (15; 16) sich ausgehend von der Rückenlehne (14) verjüngt, insbesondere pyramidenförmig oder konusförmig ausgebildet ist.

5. Kopfstütze nach Anspruch 3 und 4, dadurch gekennzeichnet, daß die Drehachse (26) und die Mittelachse (25) des Stützelements (15; 16) zusammenfallen.

6. Kopfstütze nach Anspruch 3 und 4, dadurch gekennzeichnet, daß die Drehachse (26) und die Mittelachse (25) des Stützelements (15; 16) zueinander versetzt sind.

7. Kopfstütze nach einem der Ansprüche 4 bis 6, dadurch gekennzeichnet, daß der Winkel (α; β) zwischen der Mantelfläche (27, 28) des Stützelements (15; 16) und der Rückenlehne (14) sich entlang des Umfangs des Stützelements (15; 16) verändert.

8. Kopfstütze nach Anspruch 7, dadurch gekennzeichnet, daß das Stützelement (15; 16) Seitenflächen (27; 28) aufweist, die unterschiedliche Winkel (α; β) mit der Rückenlehne (14) einschließen.

9. Kopfstütze nach Anspruch 8, dadurch gekennzeichnet, daß die Seitenflächen (27; 28) des Stützelements (15; 16) an ihrer der Rückenlehne (14) zugewandten Seite Seitenkanten (21; 22; 23; 24) unterschiedlicher Länge aufweisen.

10. Kopfstütze nach Anspruch 7 oder 8, dadurch gekennzeichnet, daß die Spitze (20) des Stützelements (15; 16) gegenüber der Mittelachse (25) des Stützelements (15; 16) versetzt ist.

11. Kopfstütze einem der Ansprüche 2 bis 10, dadurch gekennzeichnet, daß das Tragteil (45) einen zweiteiligen Drehzapfen (33, 34) mit einer Profilverzahnung (42) umfaßt.

12. Kopfstütze nach Anspruch 11, dadurch gekennzeichnet, daß die beiden Teile (33, 34) des Drehzapfens gegeneinander mit einer Feder (35) vorgespannt sind.

13. Kopfstütze nach einem der Ansprüche 1 bis 12, dadurch gekennzeichnet, daß das Stützelement (15; 16) an einem Schlitten (32) befestigt ist, der in einer Kulissenführung (31) an der Rückenlehne (14) verschieblich ist.

14. Stützelement für eine Kopfstütze (13) nach einem der vorhergehenden Ansprüche, dadurch gekennzeichnet, daß das Stützelement (15; 16) aus einem Schaumstoff hergestellt ist.
